# EUROPÄISCHE PATENTSCHRIFT

(11) **EP 3 161 952 B1**
(45) Veröffentlichungstag und Bekanntmachung des Hinweises auf die Patenterteilung: **29.07.2020**
(21) Anmeldenummer: 15732616.6
(22) Anmeldetag: 24.06.2015
(51) Int. Cl.: H02M 3/28

(54) **SCHALTNETZTEIL MIT WEB-SCHNITTSTELLE**
SWITCHING POWER SUPPLY WITH WEB INTERFACE
ALIMENTATION À DÉCOUPAGE DOTÉ D'INTERFACE WEB

(30) Priorität: 25.06.2014 EP 14173908
(43) Veröffentlichungstag der Anmeldung: 03.05.2017
(73) Patentinhaber: Siemens Aktiengesellschaft, 80333 München (DE)
(72) Erfinder: BENESCH, Karl, A-3340 Waidhofen/Ybbs (AT); VUCIC, Miroslav, A-1090 Wien (AT)
(74) Vertreter: Maier, Daniel Oliver
(86) Internationale Anmeldenummer: PCT/EP2015/064249
(87) Internationale Veröffentlichungsnummer: WO 2015/197689

(56) Entgegenhaltungen:
- WO-A1-2005/015328
- DE-A1- 10 243 782
- US-A1- 2009 313 549
- US-A1- 2011 153 786

## Beschreibung

Die Erfindung betrifft ein Schaltnetzteil mit mehreren Ausgangskanälen und einer Web-Schnittstelle zur Anbindung an ein Kommunikationsnetzwerk, sowie ein Verfahren zum Betreiben des Schaltnetzteils.

Schaltnetzteile mit mehreren Ausgangskanälen werden genutzt, um gleichzeitig unterschiedliche Verbraucher zu versorgen. Oftmals ist dabei jeder Ausgangskanal mittels eines Potentiometers oder eines DIP-Schalters separat einstellbar.

Aus der US 2010/0039043 A1 ist ein Schaltnetzteil mit mehreren Ausgangskanälen bekannt, das eine Web-Schnittstelle zur Anbindung an ein Kommunikationsnetzwerk umfasst. Über diese Web-Schnittstelle können für jeden Ausgangskanal Einstellungen vorgenommen werden. Konkret wird mit dem beschriebenen Schaltnetzteil ein Lichtsystem versorgt, wobei mittels Web-Schnittstelle verschiedene Beleuchtungsszenarien festlegbar sind.

Die Schrift US 2011/0153786 A1 beschreibt ein Verfahren zur Off-line-Parametrierung von Feldgeräten mittels einer Serviceeinheit. Einem Feldgerät wird dabei ein Web-Server zugeordnet. Die Serviceeinheit weist einen Web-Browser auf, über welche sich die Serviceeinheit über ein Kommunikationsnetz oder ein Bussystem mit dem Feldgerät verbinden kann, um Konfigurationsdaten des Feldgeräts zu laden, zu bearbeiten und für Analysezweck anzuzeigen. Die Bearbeitung und Analyse der Konfigurations-daten erfolgt allerdings off-line und nicht in Echtzeit und bezieht sich nicht auf Schaltnetzteile, insbesondere mehrkanalige Schaltnetzteile, sondern nur auf Feldgeräte, wie z.B. Messeinheiten, Sensoren oder Aktoren.

Aus der Schrift DE 102 43 782 A1 ist ebenfalls ein Parametrier- und Diagnosesystem für Feldgeräte (z.B. Sensoren und/oder Aktoren) bekannt, mit welchem Geräteparameter aus Feldgeräten ausgelesen, übertragen und/oder angezeigt werden können, wobei einen Kommunikation zwischen den Feldgeräten und einer Steuereinheit über ein Bussystem erfolgt.

Weiterhin offenbart die Schrift WO 2005/015328 A1 ein System zur web-basierten Überwachung und Steuerung von mehreren, räumlich verteilten Anlagen, wobei jede Anlage einen Web-Server aufweist, welche mittels einer Kommunikationsverbindung Daten und Informationen austauschen können.

Aus der Schrift US 2009/0313549 A1 ist ein Schweißsystem mit einer Stromversorgung bekannt, wobei das Schweißsystem eine Steuereinheit und eine Einheit zur Kommunikation mit externen Komponenten aufweist. Das Kommunikationssystem umfasst dabei einen Web-Server, welcher mit einer Remote-Einheit kommunizieren kann, auf welcher ein Web-Browser als Client läuft. Dabei können im Web-Browser der Remote-Einheit Daten des Schweißsystems, wie z.B. Steuerdaten, etc., aber auch Kommandodaten für die Stromversorgung angezeigt und eingegeben werden. Es werden allerdings keine Betriebsparameter der Stromversorgung in Echtzeit abgefragt, angezeigt und/oder eingestellt.

Bei Industrieanwendungen im Automatisierungsbereich werden an Schaltnetzteile besondere Anforderungen gestellt. Beispielsweise ist eine flexible Konfigurierung erforderlich, um auch nach Umbauten einer Industrieanlage eine zuverlässige Versorgung mit Strom sicherzustellen.

Auch die Ausfallsicherheit spielt in Industrieanwendungen eine besondere Rolle. So ist es oftmals erforderlich, auf Störungen rasch zu reagieren, um innerhalb einer Anlage Folgeschäden zu vermeiden. Fehler müssen dabei frühzeitig erkannt werden.

Es liegt der Erfindung deshalb die Aufgabe zugrunde, für ein Schaltnetzteil der eingangs genannten Art eine Verbesserung gegenüber dem Stand der Technik anzugeben, insbesondere für den Einsatz in Industrieanlagen, wobei das Schaltnetzteil flexibel und mit hoher Genauigkeit konfigurierbar ist sowie nach einer Störung rasch wieder in Betrieb genommen werden kann.

Erfindungsgemäß wird diese Aufgabe gelöst durch ein Schaltnetzteil gemäß Anspruch 1 und ein Verfahren gemäß Anspruch 11. Verbesserungen sind abhängigen Ansprüchen entnehmbar.

Dabei umfasst das Schaltnetzteil einen sogenannten Real-Time-Ethernet-Controller, welcher mit einer Steuerung des Schaltnetzteils verbunden und als Web-Server eingerichtet ist, sodass über die Web-Schnittstelle mehrere Betriebsparameter des Schaltnetzteils in Echtzeit einstellbar und/oder anzeigbar sind, wobei als Betriebsparameter für jeden Ausgangskanal eine Ausgangsspannung und/oder ein Stromlimit eingestellt und/oder angezeigt werden kann. Auf diese Weise ist das Schaltnetzteil über das Kommunikationsnetzwerk konfigurierbar und überwachbar, wobei sichergestellt ist, dass Änderungen der Konfiguration sofort wirksam werden. Zudem werden Fehler ohne Verzögerung an eine zentrale Stelle gemeldet, um notwendige Maßnahmen vorzunehmen. Eine solche Maßnahme kann beispielsweise die gezielte Abschaltung von Anlagenkomponenten sein, um Folgeschäden zu vermeiden. Da der Real-Time-Ethernet-Controller als Web-Server eingerichtet ist, erfolgt die Kommunikation mit dem Schaltnetzteil mittels eines Web-Browsers. Installiert ist der Web-Browser zum Beispiel in einem Computer, der an das Kommunikationsnetzwerk angeschlossen ist. Dieser Computer bildet die zentrale Stelle, von der aus ein erfindungsgemäßes Schaltnetzteil oder mehrere erfindungsgemäße Schaltnetzteile konfigurierbar und überwachbar ist/sind. Außer dem Web-Browser ist keine weitere Software erforderlich, um diese Funktion zu erfüllen.

Der Real-Time-Ethernet-Controller ist zur Datenübertragung mit Taktsynchronität eingerichtet. Bei einer solchen synchronisierten Kommunikation (Real-Time Class 3) erfolgt das Senden der Prozessdaten nach einer genauen, beim Anlagen-Engineering festgelegten, Reihenfolge mit höchster Präzision (maximal erlaubte Abweichung vom Beginn eines Buszykluss ist 1 ps). Diese optimierte Datenübertragung wird auch als IRT-Funktionalität bezeichnet (Isochronous Real-Time oder Taktsynchronität). Es kommt dabei zu keinen Wartezeiten.

Um bei komplexen Industrieanlagen Fehler schnell erkennen zu können ist es von Vorteil, wenn mittels des Web-Server für jeden Ausgangskanal ein Betriebsstatus anzeigbar ist. Auf diese Weise ist sichergestellt, dass an zentraler Stelle jede versorgte Anlagenkomponente überwacht wird. Veränderungen des Betriebsstatus eines Kanals oder mehrerer Kanäle sind sofort auswertbar, um entsprechende Maßnahmen abzuleiten. Erfindungsgemäß ist vorgesehen, dass jeder Ausgangskanal nach einer Überlastabschaltung mittels des Web-Server wieder einschaltbar ist. Nach einer Fehleranalyse anhand zentral ausgewerteter Daten und gegebenenfalls einem Austausch einer fehlerhaften Anlagenkomponente kann auf diese Weise der entsprechende Ausgangskanal sofort wieder aktiviert werden.

In einer vorteilhaften Ausprägung der Erfindung sind als Betriebsparameter zumindest eine Eingangsspannung und ein Eingangsstrom anzeigbar. Über die Web-Schnittstelle ist ein solches Schaltnetzteil flexibel an geänderte Anlagenkomponenten anpassbar. Die Eingangsspannung und der Eingangsstrom ergeben sich dabei durch ein versorgendes Stromnetz, an das das Schaltnetzteil angeschlossen ist und aus den an den Ausgangskanälen angeschlossenen Lasten.

Darüber hinaus ist es von Vorteil, wenn für jeden Ausgangskanal mittels Web-Server einstellbar ist, ob bei Erreichung des Stromlimits eine Abschaltung oder eine Strombegrenzung erfolgt. Auf diese Weise ist die Reaktion auf eine auftretende Störung festlegbar. Bei der Versorgung von kapazitiven Verbrauchern kann eine vorübergehende Strombegrenzung sinnvoll sein, um beim Hochfahren vorhandene Kapazitäten aufzuladen. In anderen Fällen kann eine sofortige Abschaltung notwendig sein, um mittels Schaltnetzteil versorgte Anlagenkomponenten zu schützen.

Eine weitere Verbesserung sieht vor, dass mittels Web-Server für jeden Ausgangskanal eine Einschaltverzögerung einstellbar ist. Damit lässt sich durch Vorgabe unterschiedlicher Einschaltverzögerungen eine Reihenfolge beim Hochfahren mehrerer Anlagenkomponenten festlegen. Das kann sinnvoll sein, um eine Überlastung des Schaltnetzteils zu vermeiden. Durch den Fernzugriff über die Web-Schnittstelle ist eine einfache Möglichkeit gegeben, diesen Konfigurationsvorgang von einer zentralen Stelle aus in mehreren Schritten zu optimieren.

Zur zentralen Überwachung der eingangsseitigen Anschlüsse ist es vorteilhaft, wenn mittels Web-Server eine Geräteüberlast und/oder ein Phasenausfall anzeigbar sind/ist.

Der Funktionsumfang des Schaltnetzteils wird in günstiger Weise dadurch erhöht, dass jeder Ausgangskanal mittels Web-Server separat aus- und einschaltbar ist. Die Kanäle des Schaltnetzteils sind dann über die Web-Schnittstelle von zentraler Stelle aus als Schalter zum Ein- und Ausschalten von Anlagenkomponenten nutzbar.

In einer Weiterbildung der Erfindung ist vorgesehen, dass das Schaltnetzteil ein Erweiterungsmodul umfasst und dass zumindest ein Parameter des Erweiterungsmoduls mittels Web-Server einstellbar und/oder anzeigbar ist.

Dabei ist es günstig, wenn das Erweiterungsmodul ein Puffermodul zur Überbrückung einer Versorgungsunterbrechung ist und wenn mittels Web-Server eine Pufferzeit einstellbar und/oder anzeigbar ist. Im einfachsten Fall wird dabei einem Ausgangskanal eine verlängerte Pufferzeit vorgegeben, wobei sich automatisch die Pufferzeiten für die restlichen Kanäle entsprechend verkürzen.

Eine andere günstige Variante besteht darin, dass das Erweiterungsmodul einen zusätzlichen Ausgangskanal zur Versorgung einer weiteren Last umfasst.

All diese Erweiterungsmöglichkeiten sind von zentraler Stelle aus sofort konfigurierbar, wodurch die Nutzungsflexibilität des Schaltnetzteils weiter steigt.

Des Weiteren ist es von Vorteil, wenn mittels Web-Server eine in der Steuerung des Schaltnetzteils eingerichtete Software änderbar ist. Insbesondere bei der Verwendung mehrerer Schaltnetzteile ist es besonders effizient, Softwareupdates von zentraler Stelle aus durchzuführen. Diese Situation ist bei der Versorgung von Industrieanlagen regelmäßig gegeben.

Das erfindungsgemäße Verfahren zum Betreiben des beschriebenen Schaltnetzteils sieht vor, dass mittels des Web-Server mehrere Betriebsparameter des Schaltnetzteils in Echtzeit verändert werden und dass die veränderten Betriebsparameter mittels des Web-Server angezeigt werden.

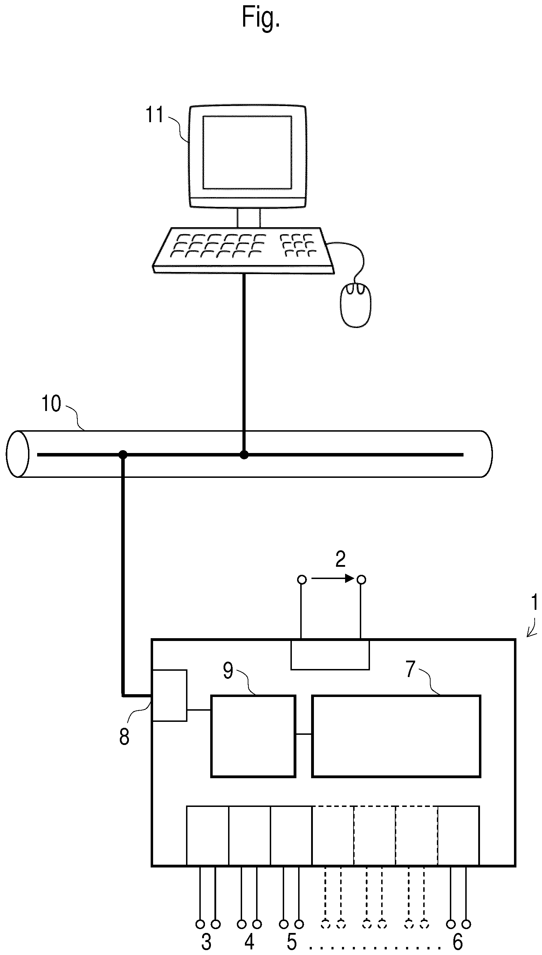

Die Erfindung wird nachfolgend in beispielhafter Weise unter Bezugnahme auf die beigefügte Figur erläutert.

Diese zeigt ein Schaltnetzteil 1, welches an eine Eingangsspannung 2 angeschlossen ist und mehrere Ausgangskanäle 3, 4, 5, 6 aufweist. An jedem Ausgangskanal 3, 4, 5, 6 liegt eine jeweilige Ausgangsspannung an.

Angesteuert ist jeder Ausgangskanal 3, 4, 5, 6 mittels einer Steuerung 7. Die nicht im Detail dargestellte Leistungsschaltung des Schaltnetzteils 1 besteht beispielsweise aus einem eingangsseitigen Gleichrichter, einem Zwischenkreis und mehreren Wandlern. Beispielsweise sind an den Zwischenkreis mehrere Resonanzwandler angeschlossen, deren Leistungsschalter mittels der Steuerung 7 angesteuert sind.

Durch ein getaktetes Ein- und Ausschalten der Leistungsschalter wird eine Zwischenkreisspannung in eine am jeweiligen Ausgangskanal anliegende Ausgangsspannung umgewandelt. In der Steuerung 7 sind zu diesem Zweck entsprechende Regelungsalgorithmen eingerichtet. Die einzelnen Ausgangsspannungen können dabei unterschiedlich oder gleich groß sein. Zudem besteht die Möglichkeit, zwei oder mehrere Kanäle 3, 4, 5, 6 parallel zu schalten, um eine höhere Ausgangsleistung bereitzustellen.

Um für jeden Ausgangskanal 3, 4, 5, 6 die gewünschte Ausgangsspannung einzustellen, sind voreilhafterweise am Gerät selbst geeignete Bedienelemente vorhanden. Im einfachsten Fall ist das eine Stellschraube.

Weitere Einstellmöglichkeiten betreffen eine Strombegrenzung für jeden Kanal 3, 4, 5, 6, wobei diese auch zweistufig eingerichtet sein kann. Für jeden Ausgangskanal 3, 4, 5, 6 sind dann zwei Stromgrenzwerte vorgegeben. Beim Erreichen des ersten Stromgrenzwertes ist für eine vorgegebene Zeitspanne ein Betrieb im Überlastbereich möglich, beispielsweise um ausgangsseitige Kapazitäten aufzuladen. Erst beim Erreichen eines zweiten Stromgrenzwertes wird der Strom begrenzt. Dabei ist es sinnvoll, wenn der jeweilige Ausgangskanal 3, 4, 5, 6 nach einer einstellbaren Begrenzungszeit abschaltet.

Zum Einstellen der Stromgrenzwerte und der Zeitspannen können ebenfalls Bedienelemente am Gerät selbst angeordnet sein.

Bei gattungsgemäßen Schaltnetzteilen mit mehreren Ausgangsgeräten ist es jedoch weitaus vorteilhafter, diese Konfigurierungsschritte über eine Web-Schnittstelle 8 vorzunehmen. Das gilt insbesondere für den Fall, das mehrere Schaltnetzteile 1 innerhalb einer Industrieanlage zu konfigurieren sind.

Erfindungsgemäß ist deshalb ein Real-Time-Ethernet-Controller 9 vorgesehen, der einerseits mit der Steuerung 7 und andererseits mit einer Web-Schnittstelle 8 verbunden ist. Dabei ist der Real-Time-Ethernet-Controller 9 als Web-Server eingerichtet. Auf diese Weise ist sichergestellt, dass die Einstellungen der Ausgangsspannungen und der Stromwerte bzw. Zeitspannen in Echtzeit über ein Kommunikationsnetzwerk 10 mittels eines Computers 11, auf dem ein Web-Browser installiert ist, vorgenommen werden können. Dabei ist es wichtig, dass vorgenommene Änderungen auch in Echtzeit in einer Ansicht des Web-Browsers angezeigt werden.

Der Real-Time-Ethernet-Controller 9 ist deshalb günstigerweise zur Datenübertragung mit Taktsynchronität eingerichtet. Ein dafür geeigneter Controller ist beispielsweise der ERTEC 200 der Firma Siemens.

Das Kommunikationsnetzwerk 10 ist beispielsweise ein Ethernet oder ein sogenanntes PROFINET. Letzteres nutzt TCP/IP und IT-Standards, ist Echtzeit-Ethernet-fähig und ermöglicht die Integration zahlreicher Feldbus-Systeme.

Ein wesentlicher Vorteil der Erfindung liegt darin, dass von einer zentralen Stelle aus auf einfache Weise und in Echtzeit komplexe Einstellungen der mehrkanaligen Stromversorgung 1 vorgenommen werden können. Diese Einstellungen sind dann in der Stromversorgung 1 abgespeichert und stehen bei jedem neuen Hochfahren der Stromversorgung 1 sofort zur Verfügung. Durch die Echtzeitübertragung besteht auch die Möglichkeit, Einstellwerte zentral abzuspeichern und beim Hochfahren via Web-Schnittstelle 8 einzulesen.

Weiters liegt ein Vorteil darin, den Status der einzelnen Ausgangskanäle 3, 4, 5, 6 in Echtzeit via Web-Browser darzustellen. Angezeigt werden neben den vorgenommenen Einstellungen auch Fehler- oder Störungsmeldungen wie zum Beispiel eine Überschreitung einer Stromgrenze. Die Echtzeit-Ausgabe ermöglicht dabei eine maschinelle Auswertung, die gegebenenfalls sofort zu entsprechenden Schutzmaßnahmen führen kann, beispielsweise zur Abschaltung mehrerer Ausgangskanäle 3, 4, 5, 6.

Der zentrale Zugriff auf mehrere Schaltnetzteile 1 erlaubt zudem auf einfache Weise eine übereinstimmende Konfiguration dieser Schaltnetzteile 1. Beispielsweise werden via Web-Browser durch Eingabe eines Wertes für alle in einer Industrieanlage verbaute Schaltnetzteile 1 dieselben Stromgrenzwerte vorgegeben.

Zur weiteren Flexibilisierung der Einsatzmöglichkeiten ist es sinnvoll, für das Schaltnetzteil 1 diverse Erweiterungsmodule vorzusehen. Im einfachsten Fall ist das ein zusätzlicher Ausgangskanal, der dann über eine Schnittstelle zwischen Grundgerät und Erweiterungsmodul mittels der Steuerung 7 angesteuert ist.

Damit ist es möglich, auch ein solches Erweiterungsmodul über die Web-Schnittstelle 8 zu konfigurieren.

Die Erfindung umfasst auch ein Schaltnetzteil 1, das aus einem Grundgerät mit Bedienelementen und einem Web-Gerät aufgebaut ist. Das Web-Gerät umfasst dann ein eigenes Gehäuse mit dem Real-Time-Ethernet-Controller 9, der Web-Schnittstelle 8 und einer Schnittstelle zur Steuerung 7 des Grundgeräts. Bei angeschlossenem Web-Gerät ist das Grundgerät via Web-Browser konfigurier- und überwachbar. Das Schaltnetzteil 1 funktioniert jedoch auch bei abgetrenntem Web-Gerät, allerdings nur mit abgespeicherten Einstellwerten, die dann in einem manuellen Modus gegebenenfalls über die Bedienelemente des Grundgeräts veränderbar sind.

## Patentansprüche

1. Schaltnetzteil (1) mit mehreren Ausgangskanälen (3, 4, 5, 6) und einer Web-Schnittstelle (8) zur Anbindung an ein Kommunikationsnetzwerk (10), **dadurch gekennzeichnet, dass** das Schaltnetzteil (1) einen Real-Time-Ethernet-Controller (9) umfasst, welcher zur Datenübertragung mittels einer Isochronous Real-Time- oder IRT-Funktionalität eingerichtet und mit einer Steuerung (7) des Schaltnetzteils (1) verbunden ist und welcher als Web-Server eingerichtet ist, sodass über die Web-Schnittstelle (8) mehrere Betriebsparameter des Schaltnetzteils (1) in Echtzeit eingestellt werden und/oder in Echtzeit übertragen und in einer Ansicht eines Web-Browsers angezeigt werden, wobei als Betriebsparameter für jeden Ausgangskanal (3, 4, 5, 6) eine Ausgangsspannung und ein Stromlimit eingestellt und/oder angezeigt werden, dass mittels des Web-Server für jeden Ausgangskanal (3, 4, 5, 6) ein Betriebsstatus in Echtzeit übertragen und angezeigt wird , und dass jeder Ausgangskanal (3, 4, 5, 6) nach einer Überlastabschaltung mittels des Web-Server wieder aktiviert wird.

2. Schaltnetzteil (1) nach Anspruch 1, **dadurch gekennzeichnet, dass** als Betriebsparameter zumindest eine Eingangsspannung (2) und ein Eingangsstrom anzeigbar sind.

3. Schaltnetzteil (1) nach einem der Ansprüche 1 bis 2, **dadurch gekennzeichnet, dass** für jeden Ausgangskanal (3, 4, 5, 6) mittels Web-Server einstellbar ist, ob bei Erreichung des Stromlimits eine Abschaltung oder eine Strombegrenzung erfolgt.

4. Schaltnetzteil (1) nach einem der Ansprüche 1 bis 3, **dadurch gekennzeichnet, dass** mittels Web-Server für jeden Ausgangskanal (3, 4, 5, 6) eine Einschaltverzögerung einstellbar ist.

5. Schaltnetzteil (1) nach einem der Ansprüche 1 bis 4, **dadurch gekennzeichnet, dass** mittels Web-Server eine Geräteüberlast und/oder ein Phasenausfall anzeigbar sind/ist.

6. Schaltnetzteil (1) nach einem der Ansprüche 1 bis 5, **dadurch gekennzeichnet, dass** jeder Ausgangskanal (3, 4, 5, 6) mittels Web-Server separat aus- und einschaltbar ist.

7. Schaltnetzteil (1) nach einem der Ansprüche 1 bis 6, **dadurch gekennzeichnet, dass** das Schaltnetzteil (1) ein Erweiterungsmodul umfasst und dass zumindest ein Parameter des Erweiterungsmoduls mittels Web-Server einstellbar und/oder anzeigbar ist.

8. Schaltnetzteil (1) nach Anspruch 7, **dadurch gekennzeichnet, dass** das Erweiterungsmodul ein Puffermodul zur Überbrückung einer Versorgungsunterbrechung ist und dass mittels Web-Server eine Pufferzeit einstellbar und/oder anzeigbar ist.

9. Schaltnetzteil (1) nach Anspruch 7 oder 8, **dadurch gekennzeichnet, dass** das Erweiterungsmodul einen zusätzlichen Ausgangskanal (3, 4, 5, 6) zur Versorgung einer weiteren Last umfasst.

10. Schaltnetzteil (1) nach einem der Ansprüche 1 bis 9, **dadurch gekennzeichnet, dass** mittels Web-Server eine in der Steuerung (7) des Schaltnetzteils eingerichtete Software änderbar ist.

11. Verfahren zum Betreiben eins Schaltnetzteils nach einem der Ansprüche 1 bis 10, **dadurch gekennzeichnet, dass** mittels des Web-Server mehrere Betriebsparameter des Schaltnetzteils (1) in Echtzeit verändert werden und dass die veränderten Betriebsparameter mittels eines Web-Browsers angezeigt werden.

## Claims

1. Switch mode power supply unit (1) having a plurality of output channels (3, 4, 5, 6) and a web interface (8) for connection to a communications network (10), **characterised in that** the switch mode power supply unit (1) comprises a real-time Ethernet controller (9) which is designed for data transmission by means of an Isochronous Real-Time or IRT functionality and is connected to a controller (7) of the switch mode power supply unit (1) and which is equipped as a web server, such that via the web interface (8) a plurality of operating parameters of the switch mode power supply unit (1) can be set in real time and/or transmitted in real time and displayed in a view of a web browser, wherein an output voltage and a current limit can be set and/or displayed as operating perameters for each output channel (3, 4, 5, 6), that an operating status can be transmitted and displayed in real time for each output channel (3, 4, 5, 6) by means of the web server, and that each output channel (3, 4, 5, 6) can be activated again after an overload shutdown by means of the web server.

2. Switch mode power supply unit (1) according to claim 1, **characterised in that** at least one input voltage (2) and one input current can be displayed as operating parameters.

3. Switch mode power supply unit (1) according to one of claims 1 to 2, **characterised in that** for each output channel (3, 4, 5, 6) it is possible to use a web server to set whether a shutdown or a current limitation takes place when the current limit is reached.

4. Switch mode power supply unit (1) according to one of claims 1 to 3, **characterised in that** a power-on delay can be set for each output channel (3, 4, 5, 6) by means of the web server.

5. Switch mode power supply unit (1) according to one of claims 1 to 4, **characterised in that** a device overload and/or a phase failure can be displayed by means of the web server.

6. Switch mode power supply unit (1) according to one of claims 1 to 5, **characterised in that** each output channel (3, 4, 5, 6) can be shut down or activated separately by means of the web server.

7. Switch mode power supply unit (1) according to one of claims 1 to 6, **characterised in that** the switch mode power supply unit (1) comprises an expansion module and that at least one parameter of the expansion module can be set and/or displayed by means of the web server.

8. Switch mode power supply unit (1) according to claim 7, **characterised in that** the expansion module is a buffer module to bridge a supply interruption and that a buffer time can be set and/or displayed by means of the web server.

9. Switch mode power supply unit (1) according to claim 7 or 8, **characterised in that** the expansion module comprises an additional output channel (3, 4, 5, 6) to supply a further load.

10. Switch mode power supply unit (1) according to one of claims 1 to 9, **characterised in that** software installed in the controller (7) of the switch mode power supply unit can be modified by means of the web server.

11. Method for operating a switch mode power supply unit according to one of claims 1 to 10, **characterised in that** a plurality of operating parameters of the switch mode power supply unit (1) can be changed in real time by means of the web server and that the changed operating parameters are displayed by means of a web browser.

## Revendications

1. Alimentation à découpage (1) dotée de plusieurs canaux de sortie (3, 4, 5, 6) et d'une interface web (8) pour connexion à un réseau de communication (10), **caractérisée en ce que** l'alimentation à découpage (1) comprend un contrôleur Ethernet en temps réel (9) qui est configuré pour transmettre des données au moyen d'une fonctionnalité en temps réel isochrone ou IRT et qui est relié à une commande (7) de l'alimentation à découpage (1) et est configuré en tant que serveur web, de sorte que, via l'interface web (8), plusieurs paramètres de fonctionnement de l'alimentation à découpage (1) sont réglés en temps réel et/ou transmis en temps réel et affichés dans un affichage d'un navigateur web, en tant que paramètres de fonctionnement étant réglés et/ou affichés, pour chaque canal de sortie (3, 4, 5, 6), une tension de sortie et une limite de courant, **en ce qu'**un statut de fonctionnement est transmis en temps réel et affiché au moyen du serveur web pour chaque canal de sortie (3, 4, 5, 6) et **en ce que** chaque canal de sortie (3, 4, 5, 6) est de nouveau activé après une coupure de surcharge au moyen du serveur web.

2. Alimentation à découpage (1) selon la revendication 1, **caractérisée en ce que** peuvent être affichés, en tant que paramètres de fonctionnement, au moins une tension d'entrée (2) et un courant d'entrée.

3. Alimentation à découpage (1) selon l'une des revendications 1 à 2, **caractérisée en ce qu'**il est possible de régler, pour chaque canal de sortie (3, 4, 5, 6) au moyen du serveur web, si, à l'obtention de la limite de courant, il y a coupure ou limitation de courant.

4. Alimentation à découpage (1) selon l'une des revendications 1 à 3, **caractérisée en ce qu'**une temporisation d'enclenchement peut être paramétrée au moyen du serveur web pour chaque canal de sortie (3, 4, 5, 6).

5. Alimentation à découpage (1) selon l'une des revendications 1 à 4, **caractérisée en ce qu'**une surcharge d'appareil et/ou une défaillance de phase peuvent être affichées au moyen du serveur web.

6. Alimentation à découpage (1) selon l'une des revendications 1 à 5, **caractérisée en ce que** chaque canal de sortie (3, 4, 5, 6) peut séparément être coupé ou enclenché au moyen du serveur web.

7. Alimentation à découpage (1) selon l'une des revendications 1 à 6, **caractérisée en ce que** l'alimentation à découpage (1) comprend un module additionnel et **en ce qu'**au moins un paramètre du module additionnel peut être réglé et/ou affiché au moyen du serveur web.

8. Alimentation à découpage (1) selon la revendication 7, **caractérisée en ce que** le module additionnel est un module tampon pour compenser une coupure d'alimentation et **en ce qu'**un temps de compensation peut être réglé et/ou affiché au moyen du serveur web.

9. Alimentation à découpage (1) selon la revendication 7 ou 8, **caractérisée en ce que** le module additionnel comprend un canal de sortie supplémentaire (3, 4, 5, 6) pour alimenter une autre charge.

10. Alimentation à découpage (1) selon l'une des revendications 1 à 9, **caractérisée en ce qu'**un logiciel configuré dans la commande (7) de l'alimentation à découpage peut être modifié au moyen du serveur web.

11. Procédé d'exploitation d'une alimentation à découpage selon l'une des revendications 1 à 10, **caractérisé en ce que** plusieurs paramètres de fonctionnement de l'alimentation à découpage (1) sont modifiés en temps réel au moyen du serveur web et **en ce que** les paramètres de fonctionnement modifiés sont affichés au moyen d'un navigateur web.
